# EUROPEAN PATENT APPLICATION

(11) **EP 4 782 134 A1**
(43) Date of publication of application: **29.07.2026**
(21) Application number: 26153619.7
(22) Date of filing: 22.01.2026
(51) Int. Cl.: B23K 9/095, B23K 26/03, B23K 31/12, G06T 19/00

(54) **WELDING DEFECT DETECTION SYSTEM AND METHOD**

(30) Priority: 24.01.2025 KR 20250011754
(71) Applicant: SAMSUNG SDI CO., LTD., Yongin-si, Gyeonggi-do 17084 (KR)
(72) Inventor: CHOI, Dongjin, 17084 Yongin-si (KR)
(74) Representative: Marks & Clerk LLP

(57) **Abstract**

The present disclosure relates to a welding defect detection system and method capable of ensuring the safety and performance of the secondary battery by detecting defects of the welding part of the secondary battery. The system for detecting welding defects for a welding part of a secondary battery includes a primary detection module configured to detect and collect multidimensional image data for a welding part of a secondary battery, a data management module configured to store and manage the primary detection data, a secondary detection module configured to determine whether there is a defect in the welding part based on the stored and managed data, and a result transmission module configured to provide a determination result to a manufacturing execution system.

## Description

### BACKGROUND

### 1. Field

The present disclosure relates to a system and method for detecting welding defects in a welded part of a secondary battery.

### 2. Description of the Related Art

Secondary batteries can be charged and discharged, unlike primary batteries that cannot be recharged. Low-capacity secondary batteries are used in small portable electronic devices such as smartphones, feature phones, laptop computers, digital cameras, and camcorders. Large-capacity secondary batteries are widely used as power sources for driving motors such as in hybrid cars and electric cars, and as power storage batteries. A secondary battery includes an electrode assembly that includes a positive and negative electrode, a case that accommodates the electrode assembly, and electrode terminals connected to the electrode assembly.

Strict quality control is essential during a secondary battery manufacturing process to ensure the reliability and safety of the secondary battery. In particular, welding is a key process of sealing and assembling secondary batteries, such that welding quality inspection is very important. However, existing inspection technologies mainly rely on visual detection or single-dimensional data analysis, which have problems such as possible errors and inconsistent results.

As such, existing inspection technologies have limitations in effectively detecting micro-sized defects or ensuring the safety of secondary batteries. In addition, since the detection process relies on an individual detector or limited data, the accuracy and reliability of the results are likely to be low.

The information disclosed in this background section is for enhancement of understanding of the background of the present disclosure. It may contain information that does not constitute related or prior art.

### SUMMARY OF THE DISCLOSURE

The present disclosure is directed to providing a welding defect detection system and method capable of detecting defects in the welded part of a secondary battery to ensure the safety and performance of the secondary battery.

A system for detecting welding defects in a welding part of a secondary battery according to an embodiment of the present disclosure includes a primary detection module configured to detect and collect multidimensional image data of the welding part, a data management module configured to store and manage the primary detection data, a secondary detection module configured to determine whether there is a defect in the welding part based on the stored and managed primary detection data, and a result transmission module configured to provide the determination result to a manufacturing execution system (MES).

According to some embodiments of the present disclosure, the primary detection module may be configured to collect data including welding, cleaning, and appearance detection images from a plurality of detectors, and the primary detection module is configured to analyze the locations and types of initial defects.

According to some embodiments of the present disclosure, the primary detection module may be configured to provide additional detection data to additionally detect defects missed during primary detection.

According to some embodiments of the present disclosure, the data management module may be configured to manage the multidimensional image data and meta information by integrating and storing the primary detection data and secondary detection data.

According to some embodiments of the present disclosure, the data management module may be configured to track a detection history based on the multidimensional image data and statistically visualize an analysis result.

According to some embodiments of the present disclosure, the secondary detection module may be configured to reanalyze data of the primary detection module to determine the presence of defects, detect additional defects, and determine the severity of the defects.

According to some embodiments of the present disclosure, the secondary detection module may learn the types and occurrence patterns of defects, analyze the causes of occurrence of defects, and classify the types of defects. For this purpose, an artificial intelligence (AI)-based algorithm may be used.

According to some embodiments of the present disclosure, the secondary detection module may be configured to visualize the locations of the defects of the welding part in a three-dimensional space.

According to some embodiments of the present disclosure, the result transmission module may be configured to identify a defective product in conjunction with the MES and transmit a process removal instruction for the defective product.

According to some embodiments of the present disclosure, the result transmission module may be configured to provide real-time feedback for improving a production process based on the result of the determination.

A method (e.g. a computer-implemented method) of detecting welding defects in a welding part of a secondary battery according to another embodiment of the present disclosure includes a primary detection operation of detecting and collecting multidimensional image data of the welding part, an operation of storing and managing the primary detection data, a secondary detection operation of determining whether there is a defect in the welding part based on the stored and managed primary detection data, and an operation of providing the determination result to an MES.

According to some embodiments of the present disclosure, the primary detection operation may include collecting data including welding, cleaning, and appearance detection images from a plurality of detectors and analyzing the locations and types of initial defects.

According to some embodiments of the present disclosure, the primary detection operation may include providing additional detection data to detect additional defects missed during the primary detection operation.

According to some embodiments of the present disclosure, the operation of storing and managing the data may include tracking a detection history based on the multidimensional image data and statistically visualizing an analysis result.

According to some embodiments of the present disclosure, the secondary detection operation may include reanalyzing the primary detection data to determine the presence of defects, detect additional defects, and determine the severity of the defects.

According to some embodiments of the present disclosure, the secondary detection operation may include learning the types and occurrence patterns of defects, analyzing the causes of occurrence of defects, and classifying the types of defects. For this purpose, an AI-based algorithm may be used.

According to some embodiments of the present disclosure, the operation of providing the determination result to the MES may include identifying a defective product and transmitting a process removal instruction for the defective product.

A system for detecting welding defects in a welding part of a secondary battery according to still another embodiment of the present disclosure includes a primary detection module configured to collect and preprocess multidimensional image data of the welding part, a data management module configured to store and manage the preprocessed data, a secondary detection module configured to reanalyze and determine whether there is a defect in the welding part based on the stored and managed data, a defect prediction module configured to analyze the possibility of occurrence of defects in the welding part by utilizing secondary detection data, and a process control module configured to control a process based on defect prediction result of the defect prediction module.

According to some embodiments of the present disclosure, the secondary detection module may be configured to determine the presence of defects, determine the severity of defects, and detect additional defects based on primary detection data.

According to some embodiments of the present disclosure, the defect prediction module may be configured to combine past process data and real-time data to predict the possibility of occurrence of welding defects. For this purpose, an AI-based algorithm may be used.

At least some of the above and other features of the invention are set out in the claims. Aspects and features of the present disclosure are not limited to those described above, and other aspects and features not specifically mentioned herein will be clearly understood by those skilled in the art from the description of the present disclosure below.

### BRIEF DESCRIPTION OF THE DRAWINGS

The above and other objects, features and advantages of the present disclosure will become more apparent to those of ordinary skill in the art by describing exemplary embodiments thereof in detail with reference to the accompanying drawings, in which:
FIG. 1 schematically illustrates a pouch-type secondary battery;
FIG. 2 is a cross-sectional view of a cylindrical secondary battery;
FIG. 3A is a top perspective view of a prismatic secondary battery;
FIG. 3B is a cross-sectional view taken along line I-I' of FIG. 3A;
FIG. 4 is an exemplary view of a secondary battery module in which secondary batteries are arranged;
FIG. 5 is an exemplary view of a secondary battery pack configured to apply the secondary battery module illustrated in FIG. 4 to an actual product;
FIG. 6 is a drawing illustrating an automobile including the secondary battery pack illustrated in FIG. 5;
FIG. 7 illustrates a system for detecting welding defects of a secondary battery according to an embodiment of the present disclosure;
FIG. 8 illustrates a method of detecting welding defects according to another embodiment of the present disclosure;
FIG. 9 illustrates a welding defect detection system according to another embodiment of the present disclosure; and
FIG. 10 is a flowchart illustrating a manufacturing process of a prismatic secondary battery and a welding defect detection system according to an embodiment of the present disclosure is applied thereto.
FIG. 11 is a diagram illustrating the signal flow of a welding defect detection system according to an embodiment of the present disclosure.
FIG. 12 illustrates a specific function of the secondary detection module 300 according to an embodiment of the present disclosure.
FIG. 13 illustrates the overall signal flow and data transmission process of a welding defect detection system according to an embodiment of the present disclosure.
FIG. 14 illustrates defect types by a welding defect detection system according to the embodiment of the present disclosure, and the defect types of the welding part are shown through multidimensional image data of 3D images, 2D images, and 2.5D images.

### DETAILED DESCRIPTION OF EXEMPLARY EMBODIMENTS

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

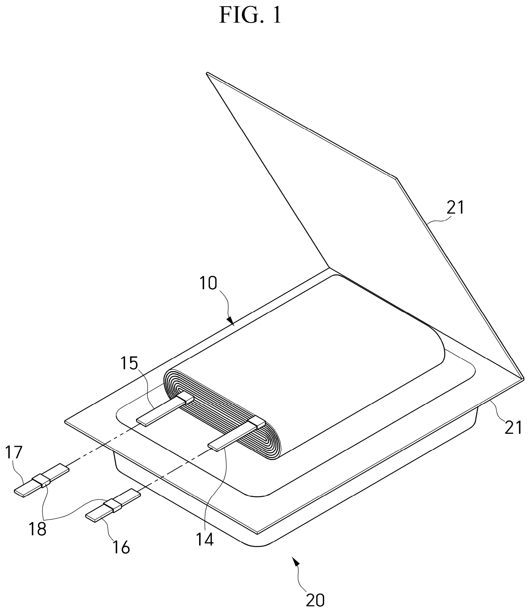

FIG. 1 schematically illustrates a pouch-type secondary battery. The pouch-type secondary battery includes an electrode assembly 10 and a pouch 20 that accommodates the electrode assembly 10.

The electrode assembly 10 includes an electrode tab 14 and a second electrode tab 15 that may be electrically connected to respective external first and second terminal leads 16 and 17 by welding. A tab film 18 may be attached to each of the first and second terminal leads 16 and 17 for insulation from the pouch 20.

The pouch 20 may be sealed by having sealing parts 21 at the edges thereof contact each other with the electrode assembly 10 accommodated therein, in which case the sealing may be achieved with the tab film 18 interposed between the sealing parts 21. The sealing parts 21 of the pouch 20 may each be made of a thermal fusion material that generally has weak adhesion to metal. Thus, first and second terminal leads 16 and 17 may be sealed with the pouch 20 by interposing the thin tab film 18 between the sealing parts 21.

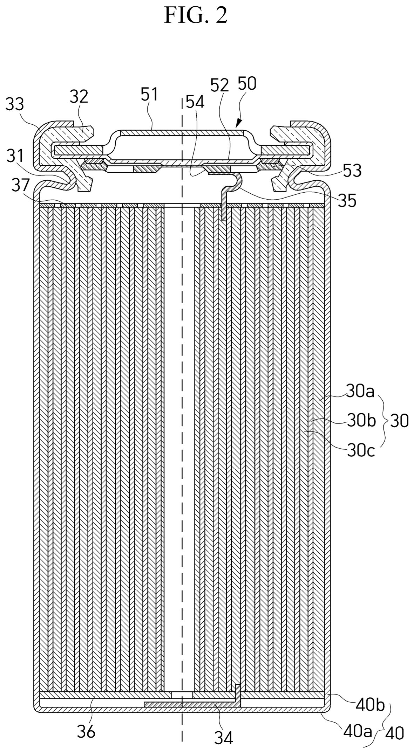

FIG. 2 illustrates a cylindrical secondary battery. As shown in FIG. 2 the secondary battery includes an electrode assembly 30, a case 40 accommodating the electrode assembly 30 and an electrolyte therein, a cap assembly 50 coupled to an opening of the case 40 to seal the case 40, and an insulating plate 37 positioned between the electrode assembly 30 and the cap assembly 50 inside the case 40.

The electrode assembly 30 may include a first electrode 30c and a second electrode 30a positioned, with a separator 30b interposed between the electrodes 30a and 30c, with the electrode assembly 30 wound in a jelly-roll shape.

The first electrode 30c includes a first substrate and a first active material layer on the first substrate. A first lead tab 35 may extend outwardly from a first uncoated portion of the first substrate where the first active material layer is not provided, and the first lead tab 35 may be electrically connected to the cap assembly 50.

The second electrode 30a includes a second substrate and a second active material layer on the second substrate. A second lead tab 34 may extend outwardly from a second uncoated portion of the second substrate at where the second active material layer is not provided, and the second lead tab 34 may be electrically connected to the case 40. The first lead tab 35 and the second lead tab 34 may extend in opposite directions.

The first electrode 30c may act as a positive electrode. In such an embodiment, the first substrate may be made of, for example, an aluminum foil, and the first active material layer may include, for example, a transition metal oxide. The second electrode 30a may act as a negative electrode. In such an embodiment, the second substrate may be made of, for example, a copper foil or a nickel foil, and the second active material layer may include, for example, graphite.

The separator 30b prevents a short circuit between the first electrode 30c and the second electrode 30a while allowing movement of lithium ions therebetween. The separator 30b may be made of, for example, a polyethylene film, a polypropylene film, a polyethylene-polypropylene film, or the like.

The case 40 accommodates the electrode assembly 30 and, together with the cap assembly 50, forms the external appearance of the secondary battery. The case 40 may have a substantially cylindrical body portion 40b and a bottom portion 40a connected to one side (e.g., to one end) of the body portion 40b. A beading part 31 (e.g., a bead) deformed inwardly may be formed in the body portion 40b, and a crimping part 33 (e.g., a crimp) bent inwardly may be formed at an open end of the body portion 40b.

The beading part 31 can reduce or prevent movement of the electrode assembly 30 inside the case 40 and can facilitate seating of the gasket 32 and the cap assembly 50. The crimping part 33 may firmly fix the cap assembly 50 by pressing the edge of the case 40 against the gasket 32. The case 40 may be formed, for example, of steel plated with nickel.

The cap assembly 50 may be fixed to the inside of the crimping part 33 by a gasket 32 to seal the case 40. The cap assembly 50 may include an upper cap 51, a safety vent 52, a lower cap 53, an insulating member, and a sub plate 54. But the present disclosure is not limited to such a configuration and may be modified in various ways.

The upper cap 51 may be positioned at the uppermost part of the cap assembly 50. The upper cap 51 may include a terminal part that protrudes upwardly and is connected to an external circuit,. The terminal part of upper cap 51 may include an outlet for discharging gas.

The safety vent 52 may be located under the upper cap up 51. The safety vent 52 may include a protrusion part that is convex downward and is connected to the sub plate 54. One or more notches may be formed in the safety vent 52 around the protrusion part.

When gas is generated due to overcharging or abnormal operation of the secondary battery, the protrusion part is deformed upwardly by the gas pressure and separates from the sub plate 54 while the safety vent 52 is cut (e.g., bursts or tears) along the notch. The cut safety vent 52 may prevent the secondary battery from exploding by allowing for the gas to be discharged to outside of the secondary battery.

The lower cap 53 may be positioned below the safety vent 52. The lower cap 53 may have a first opening for exposing the protrusion part of the safety vent 52 and a second opening for gas discharge. The insulating member may be positioned between the safety vent 52 and the lower cap 53 to insulate the safety vent 52 and the lower cap 53.

The sub plate 54 may be under the lower cap 53. The sub plate 54 may be fixed to a lower surface of the lower cap 53 to block the first opening of the lower cap 53, and the protrusion part of the safety vent 53 may be fixed to the sub plate 54. The first lead tab 35, which extends from the electrode assembly 30 may be fixed to the sub plate 54. Accordingly, the upper cap 51, the safety vent 52, the lower cap 53, and the sub plate 54 may be electrically connected to the first electrode 30c of the electrode assembly 30.

The insulating plate 37 may be positioned to be in contact with the electrode assembly 30 below the beading part 13. The insulating plate 37 may have a tab opening through which the first lead tab 35 extends. The cap assembly 50, which is electrically connected to the first electrode by the first lead tab, may face the electrode assembly with an insulating plate 37 interposed therebetween and may maintain an insulated state (e.g., electrically insulated) between the cap assembly 50 and the electrode assembly 30. Another insulating plate 36 may be included for insulation between the electrode assembly 30 and the bottom portion 40a of the case 40.

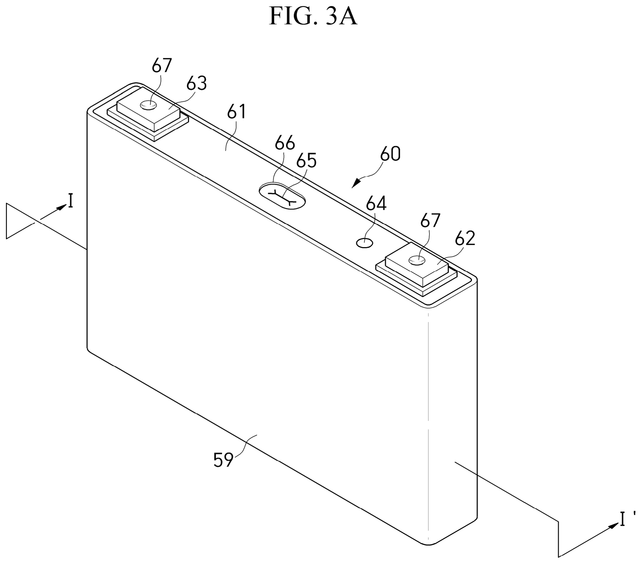

FIG. 3A is a top perspective view of a prismatic secondary battery, according to embodiments of the present disclosure.

A case 59 defines an external appearance of the prismatic secondary battery. The case 59 may be made of a conductive metal, such as aluminum, aluminum alloy, or nickel-plated steel. In addition, the case 59 may provide a space for accommodating an electrode assembly therein.

A cap assembly 60 may include a cap plate 61 that covers the opening of the case 51. In some examples, the case 59 and the cap plate 61 may be made of a conductive material. Here, a first terminal 63 and a second terminal 62 may be electrically connected to respective positive and negative (or negative and positive) electrodes inside the case, and the first and second terminals 63 and 62 may protrude outward through the cap plate 61.

The cap plate 61 may be equipped with an electrolyte injection port 64 and a sealing plug (or seal pin), and the cap plate 61 may include a vent 66 with a notch 65. The vent 66 is for discharging gas generated inside the secondary battery.

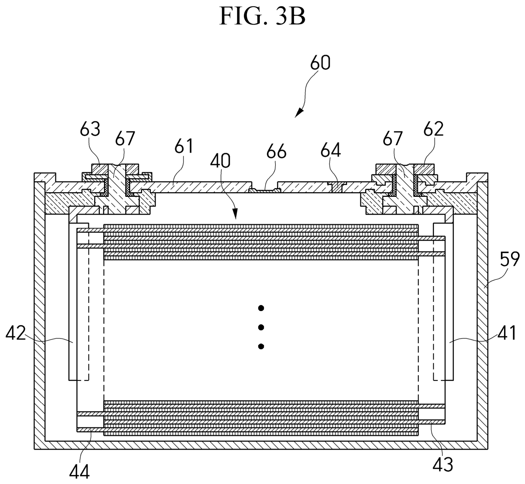

FIG. 3B is a cross-sectional view taken along the line I-I' of FIG. 1, according to embodiments of the present disclosure.

A prismatic secondary battery may include an electrode assembly 40, a first current collector 41, a first terminal 62, a second current collector 42, a second terminal 63, a case 51, and a cap assembly 60.

An electrode assembly 40 may be formed by winding or stacking a first electrode plate, a separator, and a second electrode plate, which are formed as thin plates or films. When the electrode assembly 40 is a wound stack, a winding axis may be parallel to the longitudinal direction (e.g., the y direction) of the case 51. In some other embodiments, the electrode assembly 40 is a stack type rather than a winding type. But the shape of the electrode assembly 40 is not limited in the present disclosure. In addition, the electrode assembly 40 may be a Z-stack electrode assembly in which a positive electrode plate and a negative electrode plate are provided to sides of a separator, which is then bent into a Z-stack. In addition, one or more electrode assemblies may be stacked such that long sides of the electrode assemblies are adjacent to each other and accommodated in the case. The number of electrode assemblies in the case is not limited in the present disclosure. The first electrode plate of the electrode assembly may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 43 (e.g., a first uncoated portion) that is a region where the first electrode active material is not applied. The first electrode tab 43 may act as a current flow path between the first electrode plate and the first current collector 41. In some embodiments, when the first electrode plate is made, the first electrode tab 43 is formed by being cut to protrude to a first side of the electrode assembly 40. In other embodiments, the first electrode tab 43 protrudes to one side of the electrode assembly 40 more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 44 (e.g., a second uncoated portion) that is a region where the second electrode active material is not applied. The second electrode tab 44 may act as a current flow path between the second electrode plate and the second current collector 42. In some embodiments, the second electrode tab 44 may be formed by being cut to protrude to the other side (e.g., the opposite side) of the electrode assembly when the second electrode plate is made, or the second electrode plate may protrude to a second side of the electrode assembly more than (e.g., farther than or beyond) the separator without being separately cut.

The separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, or the like.

In some embodiments, the electrode assembly 40 is accommodated in the case 10 along with an electrolyte.

In the electrode assembly 40, the first current collector 41 and the second current collector 42 may be welded and connected to the first electrode tab 43 extending from the first electrode plate and the second electrode tab 44 extending from the second electrode plate, respectively. In embodiments in which the first electrode tab 43 and the second electrode tab 44 are located at the top of the electrode assembly 40, the first and second current collectors are located at the top of the electrode assembly 40.

As illustrated in FIG. 3B, the first current collector 41 and the second current collector 42 are connected to the first terminal 62 and the second terminal 63 through connection members 67. The connection members 67 may each have an outer peripheral surface that is threaded, and the connection members 67 may be fastened to the first terminal 62 and the second terminal 63 by screwing. However, the present disclosure is not limited to8 such a configuration. For example, the connection members 67 may also be coupled to the first terminal 62 and the second terminal 63 by riveting or welding.

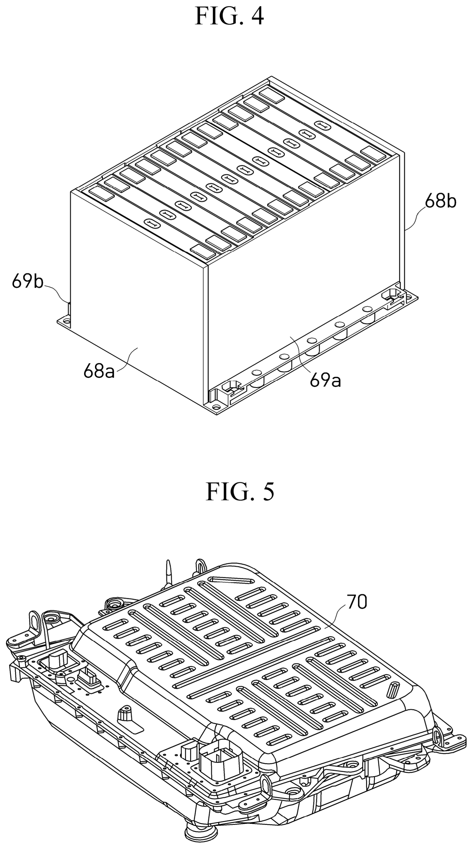

FIG. 4 is a perspective view of a secondary battery module in which secondary batteries are arranged according to embodiments of the present disclosure. With the increase in secondary battery capacity for driving electric vehicles or the like, a secondary battery module may be manufactured by arranging a plurality of secondary battery cells transversely and/or longitudinally and connecting the secondary battery cells together. The plurality of secondary batteries may be arranged in a space defined by a pair of facing end plates 68a and 68b and a pair of facing side plates 69a and 69b. The secondary batteries may be arranged in an arrangement (direction) and number to obtain desired voltage and current specifications.

FIG. 5 is a perspective view of a battery pack 70 according to embodiments of the present disclosure. The battery pack 70 may include an assembly to which individual batteries are electrically connected and a pack housing accommodating the batteries. In the drawings, components of the battery pack 70 such as a bus bar, a cooling unit, external terminals for electrically connecting batteries, etc., are not shown.

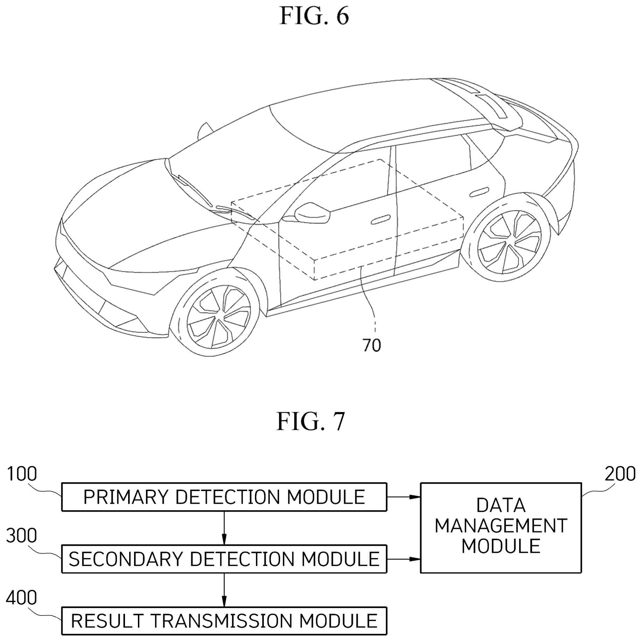

The battery pack 70 may be mounted on (or in) a vehicle. The vehicle may be, for example, an electric vehicle, a hybrid vehicle, or a plug-in hybrid vehicle. The vehicle may be a four-wheeled vehicle or a two-wheeled vehicle, but the present disclosure is not limited thereto. FIG. 6 shows a vehicle that includes the battery pack 70 shown in FIG. 5 on the lower body thereof. The vehicle may operate by (e.g., may be powered by) receiving power from the battery pack 70.

Aspects of the present disclosure include detecting welding defects of a welding part of a secondary battery regardless of the shape or structure of the secondary battery. For example, defects in a welding part of a pouch-type, cylindrical, or prismatic secondary battery can be detected. Furthermore, the present disclosure can also be used to detect defects of a welding part of a secondary battery module or pack.

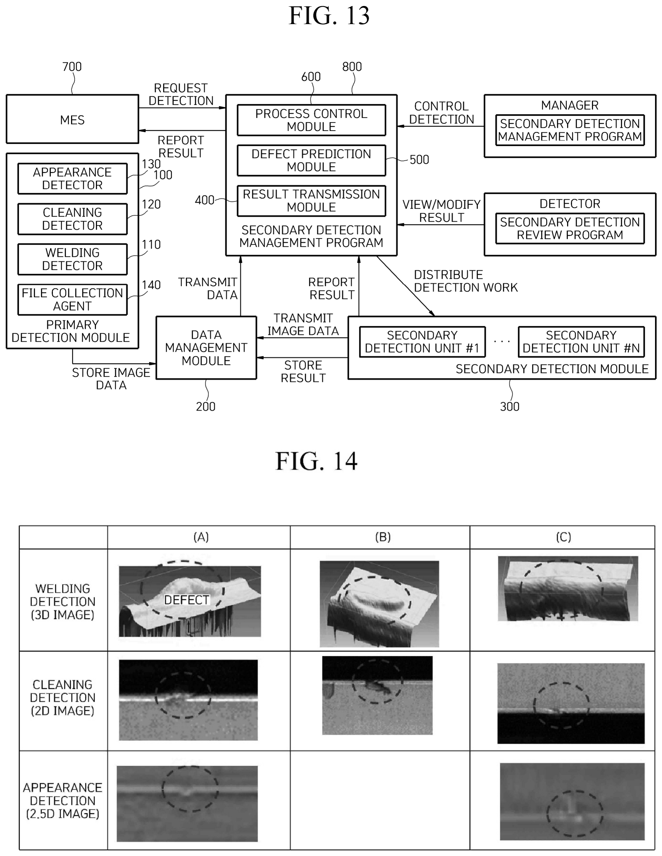

FIG. 7 illustrates a system for detecting defects in a welding part of a secondary battery according to an embodiment of the present disclosure. The system for detecting welding defects in a welding part of a secondary battery according to an embodiment of the present disclosure may include a primary detection module 100 configured to detect and collect multidimensional image data of the welding part, a data management module 200 configured to store and manage primary detection data, a secondary detection module 300 configured to determine whether there is a defect in the weld based on the stored data, and a result transmission module 400 configured to provide the determined result to a manufacturing execution system (MES) 700 (see FIG. 13).

Particular aspects of the present disclosure relate to a system for inspecting welding quality and determining whether there is a defect by using multidimensional image data of a welding part of a secondary battery, with the system including the primary detection module 100, the data management module 200, the secondary detection module 300, and the result transmission module 400.

The primary detection module 100 according to the embodiment of the present disclosure detects and collects multidimensional image data. The primary detection module 100 may obtain data from a plurality of detectors including welding, cleaning, and appearance detectors, and each detector may collect multidimensional image data, such as 2D image data, 2.5D appearance image data, and 3D welding image data. The image data may represent the welding part at one or more stages within a manufacturing process. The image data may be of a real-world welding part (e.g. of a secondary battery being manufactured, or of a manufactured secondary battery). The welding image data may be 3D image data representing the shape of the welding part. The welding image data may be obtained after a welding step in the manufacturing process. The cleaning data may be 2D image data (e.g. including greyscale and/or color data) representing the welding part (e.g. surface condition and/or color information). The 2D image data may be obtained after a cleaning step in the manufacturing process. The appearance image data may be 2.5D image data representing the appearance of a surface of the welding part. The 2.5D image data may help identify external defects by detecting the appearance of the welding part. The 2.5D image data may be obtained after the cleaning step in the manufacturing process.

The primary detection module 100 may include a plurality of detectors, such as sensors and cameras, to acquire multidimensional images of the welding part. The primary detection module 100 may collect 2D image data (surface condition and color information based on a flat (e.g. 2D) image), 2.5D appearance image data (data that can be used to calculate a change in the level of the surface), and 3D welding image data (data including the overall shape and size of the welding part). 2.5D appearance image data may comprise 2D image data that represents the 3D structure. For instance, the 2.5D image data may represent the level of a surface at a given position. For instance, the 2.5D image data may represent the shape of the surface of the welding part (e.g. by surface normals and/or depth/height information). The primary detection module 100 may analyze the collected data in an integrated manner.

The primary detection module 100 may be linked with the data management module 200. The primary detection module 100 may provide primary detection data to the data management module 200. The data management module 200 may store and manage detection data (e.g. the primary detection data) and prepare data required for additional detection or transmit the data to the secondary detection module 300. The primary detection module 100 may include a software algorithm combined with hardware to efficiently detect defects in a detection operation.

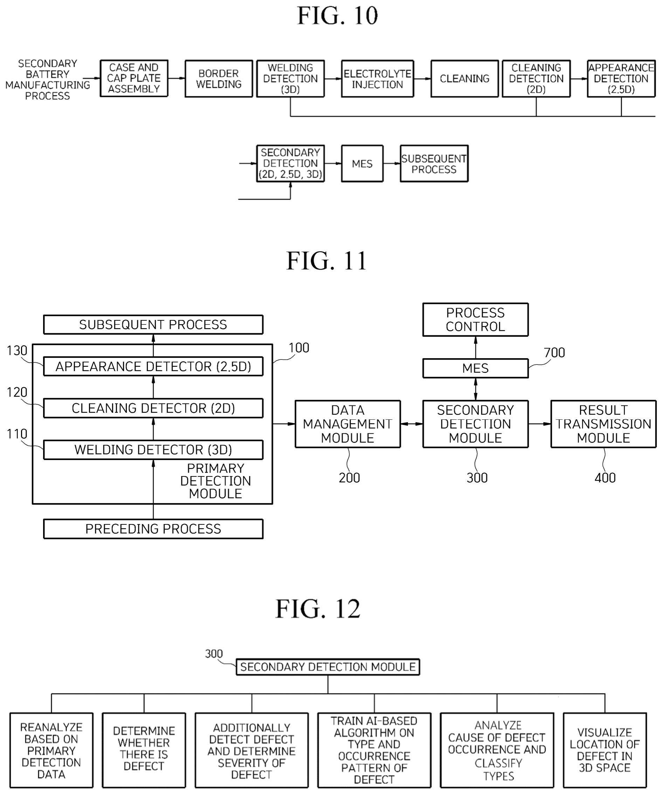

The primary detection module 100 according to an embodiment of the present disclosure may collect data including welding, cleaning, and appearance detection images from the plurality of detectors, and the primary detection module 100 may analyze the locations and types of initial defects. The primary detection module 100 includes the plurality of detectors, wherein each of the detectors is responsible for collecting and analyzing a specific type of data. For example, according to an embodiment as shown in FIG. 11, the primary detection module 100 may include a welding detector 110, a cleaning detector 120, and an appearance detector 130. Each detector may collect multidimensional image data and detect the initial defects. The welding detector 110 may generate 3D images, the cleaning detector 120 may generate 2D images and the appearance detector 130 may generate 2.5D images.

The welding detector 110 collects 3D welding image data to evaluate the overall shape of the welding part, and the welding detector 110 analyzes the height and width of a welding bead to initially determine whether there is a welding defect. The cleaning detector 120 collects 2D image data to analyze the surface color and contamination state of the welding defect, and the appearance detector 130 evaluates a change in the height of the surface and directionality using 2.5D appearance image data. The primary detection module 100 processes the collected data in real time and analyzes the locations and types of the initial defects, thereby providing important basic data for defect cause analysis and process improvement. In embodiments, the primary detection module 100 may proceed in the order of welding detection, cleaning detection, and appearance detection, but the present disclosure is not limited to this order. Two or more of the welding detection, cleaning detection and appearance detection may be implemented in parallel.

As a specific example, the welding detector 110, cleaning detector 120, and appearance detector 130 included in the primary detection module 100 may each include their own sensors and algorithms for data collection. The welding detector 110 may be configured to analyze the shape and height of the welding bead using an optical triangulation-based 3D scanning technique. The cleaning detector 120 may be configured to identify the color of the surface of the welding part and the presence of foreign substances on the surface of the welding part using a 2D camera (e.g. using a high-resolution 2D camera). The appearance detector 130 may be configured to collect 2.5D appearance image data using a photometric stereo technique. The appearance detector 130 may be configured to analyze the direction and relative height of an uneven surface. The data collected in this process is transmitted to the integrated data management module 200 and utilized for data integration and additional analysis in the subsequent operations.

Accordingly, the primary detection module 100 in embodiments of the present disclosure may more reliably analyze the locations and types of the initial defects by collecting various types of data from the plurality of detectors. This configuration may reduce data omission and misjudgment and may improve the efficiency of defect detection in the secondary battery manufacturing process. In addition, by performing welding, cleaning, and appearance detection in parallel, the detection speed can be increased, productivity can be improved, and the level of quality control throughout the process can be improved through accurate analysis at the initial operation.

The primary detection module 100 according to embodiments of the present disclosure may provide additional detection data to detect defects missed during the primary detection. The primary detection module 100 includes a function to collect and analyze additional data to detect defects that are not detected during the existing (e.g. initial) detection process, thereby increasing the usability of the multidimensional image data and ensuring the reliability of welding quality evaluation.

The primary detection module 100 may identify the missing defects based on the data collected from the plurality of detectors and detect (e.g. re-detect) areas requiring additional detection. Individual detectors such as the welding detector 110, the cleaning detector 120, and the appearance detector 130 may provide 3D, 2D, and 2.5D image data, and collect data focused on specific areas for additional detection. The above-described process is performed by the re-analysis algorithm and sensor system included in primary detection module 100 and generates accurate location and type information on the missing defects. Such data is transmitted to the data management module 200 in the subsequent operation and is integrated, stored, and managed.

As a specific example, in the case where the height and width data of the bead are incomplete in the welding detection, 3D data (welding detection) of the missed portions is recollected through additional detection. In the cleaning detection, when the surface contamination or color defects are missed, additional scanning is performed using a camera

(e.g. a high-resolution camera). In the appearance detection, when specific direction data of the uneven surface is missed, necessary data is collected by additionally adjusting lighting. All the additional data collected in this process may be integrated with the existing data and utilized in the secondary detection module 300.

Accordingly, the primary detection module 100 according to embodiments of the present disclosure may further improve the defect detection accuracy based on the multidimensional data by providing additional data for additionally detecting the defects missed in the existing detection process. This additional detection may increase the reliability of the detection results, reduce the defect rate in the production process, and increase the efficiency of welding quality management.

The data management module 200 according to the embodiment of the present disclosure performs the function of storing and managing the data collected from the primary detection module 100. The data management module 200 stores the multidimensional image data and manages meta information of each data to systematically track the detection history. In addition, the data management module 200 may support the users and the MES 700 to intuitively understand welding quality data through statistical analysis and visualization.

The data management module 200 stores and manages the multidimensional image data collected from the primary detection module 100 and provides data for the subsequent analysis and detection. The data management module 200 performs data structuring, search, meta information management, and integrated storage, and the data management module 200 is designed to manage data without loss or distortion of the data.

The data management module 200 may include a large storage unit capable of storing a large amount of multidimensional data collected from the primary detection module 100. The data management module 200 may also include software for managing the data. The data management module 200 systematically stores 2D, 2.5D, and 3D image data by structuring the 2D, 2.5D, and 3D image data, and generates meta information for each data to increase the management efficiency. The meta information may include the time of data generation, the locations of the detectors, the type of data, and quality evaluation results. In addition, the data management module 200 may provide a function to retrieve the stored data or reconstruct the stored data as needed. For example, the data management module 200 may quickly retrieve past detection data for a specific welding part or to visually provide the analysis results.

In addition, the data management module 200 according to the embodiment of the present disclosure may manage the multidimensional image data and the meta information by storing primary detection data and secondary detection data. The primary detection data may be provided by the primary detection module 100 and the secondary detection data may be provided by the secondary detection module 300. The data management module 200 may improve the reliability of the welding defect detection system through the efficient management and utilization of data by storing the primary detection data and the secondary detection data and managing the multidimensional image data and the meta information.

The stored data may include the multidimensional image data, which may include 3D welding image data, 2D image data, and 2.5D appearance image data. The data includes the meta information linked to the defect analysis results and detection history generated during the detection process. The meta information may facilitate data search, update, and statistical analysis. The data management module 200 is based on a high-performance database and is also connected to a user interface to enable visual confirmation and analysis of the data.

In a specific example, the data management module 200 includes a process of integrating and storing welding defect location data collected in the primary detection and defect severity data and defect type data in the secondary detection. For example, the shape of the defect is analyzed based on height information in 3D welding image data, and the analyzed information is combined with 2D image data to increase the accuracy of the defect location. In addition, data classified by the types of defects may be stored as meta information in the secondary detection, and such data may be used for statistical analysis for improvement of the subsequent process. The data management module 200 is designed to search for data for a specific defect type or detection operation according to a user request.

Thus, the data management module 200 according to embodiments of the present disclosure may systematically store detection data through the function of storing and managing data, thereby increasing its usability. In addition, the data management module 200 may track the detection history based on the multidimensional image data and statistically visualize the analysis results.

The data management module 200 may collect the multidimensional image data generated from the primary detection module 100 and the secondary detection module 300, and the data management module 200 may perform data accumulation and tracking management by linking with the past detection history stored in a database. The data management module 200 stores detection result data including the multidimensional image data in a structured format, and each detection data may include meta information such as detection date, detection type, defect location, defect type, and severity. In addition, the data management module 200 may statistically visualize the analysis results and provide intuitive visualized data to the user. The visualization results may be used for pattern analysis of detection data, tracking of defect occurrence frequency, and identification of process problems.

A specific example includes a process in which the data management module 200 stores the detection history, analyzes the occurrence frequency of a specific defect type, and visualizes the analysis result (e.g. as a bar graph, a heat map, or a trend graph over time). For example, by expressing the location data of welding defects collected in the primary detection as a heat map and displaying the severity data of defects in the secondary detection as a trend graph that changes according to the time axis, it is possible to identify the location and time at which a specific type of defect occurs during the process. This visualization data may be stored, output and/or provided through a user interface. The visualization data may be used as data for process improvement.

The secondary detection module 300 according to embodiments of the present disclosure determines whether there is a defect in the welding part based on the data stored in the data management module 200, analyzes (e.g. reanalyzes) defects that were not detected or uncertainly determined in the primary detection, and identifies the type of the defect and the cause of occurrence of the defect. In addition, the secondary detection module 300 may classify the severity of the welding defect and comprehensively evaluate the welding quality through three-dimensional visualization.

The secondary detection module 300 reanalyzes the quality status of the welding part by using the multidimensional image data, i.e., 2D, 2.5D, and 3D image data, stored in the data management module 200. Thus, the secondary detection module 300 can detect defects missed or incorrectly determined in the primary detection. To this end, a machine learning-based algorithm, an AI-based model, or a rule-based analysis method may be applied.

The secondary detection module 300 analyzes (e.g. reanalyzes) the presence of the defects identified in the primary detection, detects additional defects, and determines the type and severity of the defects. For example, high-difficulty defect analysis such as fine cracks in the welding part or deformation due to overheating may be performed. In addition, the secondary detection module 300 may identify the location of the defect in the welding part and visualize the identified location in three dimensions, thereby improving the understanding of the detection results.

The secondary detection module 300 provides the analysis results (e.g. secondary detection data) to the data management module 200 and the result transmission module 400 so that the analysis results to the data management module 200 and the result transmission module 400 are linked with the MES 700 in real time. As such, optimization of the manufacturing process, early detection of defective products, and quality improvement can be achieved.

The secondary detection module 300 according to the embodiment of the present disclosure may analyze (e.g. reanalyze) the data of the primary detection module 100 (e.g. may analyze the primary detection data) to determine the presence of defects, additionally detect defects, and determine the severity of the defects. That is, the secondary detection module 300 analyzes (e.g. reanalyzes) the data generated by the primary detection module 100 to determine the presence of defects and additionally detect defects missed in the primary detection. The secondary detection module also evaluates the severity of the defects, thereby enhancing the reliability of the welding defect detection. That is, the secondary detection module 300 performs advanced analysis based on the primary detection data, thereby enabling more accurate defect determination while maintaining continuity between the detection operations.

The secondary detection module 300 performs reanalysis using the multidimensional image data collected from the primary detection module 100. In the above-described process, the secondary detection module 300 re-identifies the defect data determined in the primary detection to determine the presence of the defect data. This is to identify defects that were misidentified in the primary detection to minimize production loss. In addition, an analysis algorithm for detecting micro-sized defects or additional defects that were not detected in the primary detection is applied. The secondary detection module 300 evaluates the severity of the detected defects, analyzes the impact of the defects on the product quality and process, and quantitatively determines the severity based on the analysis results. The analysis results may be stored in the data management module 200 and may be provided to the MES 700 and the user through the result transmission module 400.

In a specific example, the secondary detection module 300 enlarges a specific area of the 3D data provided by the primary detection module 100 to perform additional defect analysis or accurately identify the type and location of defects. For example, in order to quantitatively evaluate the severity of the welding defects detected in the primary detection, the height, width, and unevenness of the defective areas are analyzed, and the importance of the defects are quantified based on the analyzed data. In addition, the secondary detection module 300 may utilize the AI-based algorithm to verify the presence of the defects, and effectively identifies data that was falsely detected in the primary detection.

Accordingly, the secondary detection module 300 may perform re-analysis based on the primary detection data to determine the presence of the defect, and the secondary detection module 300 may detect additional defects to evaluate the severity of the defects, thereby enhancing the accuracy and reliability of the welding defect detection. In particular, the secondary detection module 300 may minimize errors that may occur in the existing detection process and more accurately identify the overall characteristics of welding defects through advanced analysis.

The secondary detection module 300 according to embodiments of the present disclosure may be configured to learn the types and occurrence patterns of defects, analyze the causes of occurrence of the defects, and classify the types of the defects. For this purpose, an AI-based algorithm may be used. The AI-based algorithm may be a model (e.g. a deep learning model such as a neural network model). The AI-based algorithm may be trained based on machine learning. The secondary detection module 300 can thereby perform defect analysis in a more precise and automated manner by using AI technology.

The secondary detection module 300 may utilize the AI-based algorithm, which is trained on the data provided by the primary detection module 100, and analyze the types and occurrence patterns of the defects. To this end, the secondary detection module 300 may automatically identify the repetitive characteristics of the defects occurring in the welding part by using machine learning and deep learning models, and the secondary detection module 300 extracts key data necessary for analyzing the causes of the defects. The AI-based algorithm may classify the types of defects and quantitatively evaluate the impact on product quality based on the classified results. For example, the AI-based algorithm learns the patterns and causes of the defects to predict problems that may occur in a specific process operation in advance, or the AI-based algorithm performs the function of classifying the types of defects into cracks, incomplete welding, excessive fusion, etc.

In a specific example, for the AI-based algorithm to learn the characteristics of the multidimensional image data and automatically classify the exact types of defects of the weld area, the secondary detection module 300 measures the depth and width of the defect using 3D data, and visually identifies the characteristics of the defect by combining the measured results with 2D and 2.5D image data. Through this learning, the AI-based algorithm may distinguish defects such as cracks from incomplete welding or uneven surfaces, and the AI-based algorithm may track the defect occurrence pattern to identify the cause of occurrence of defects under a specific process conditions.

In this manner, the secondary detection module 300 according to embodiments of the present disclosure may learn the types and occurrence patterns of defects, analyze the causes of occurrence of the defects, and automatically classify the types of the defects. The secondary detection module 300 thereby further improves the accuracy and efficiency of the welding defect detection.

In addition, the secondary detection module 300 according to embodiments of the present disclosure may visualize the locations of defects of the welding part in a 3D space, which provides information that allows for intuitive understanding of the characteristics of the defects. The secondary detection module can thereby quickly determine the causes of occurrence of the defects and influence of the defects.

The secondary detection module 300 may visualize the locations of the defects in the 3D space based on the multidimensional image data. The secondary detection module 300 uses the data provided from the primary detection module 100 as input, and extracts and visualizes spatial information such as the height, depth, and width of the defects. To this end, a 3D image rendering technology can be used, and the visualized data can be provided in real time through the MES 700 and the user interface. This 3D spatial visualization enables accurate analysis of not only the locations of the defects but also the status of the area around the defects.

In a specific example, when a location where a defect of the welding part occurs is generated as a 3D model and displayed on the user interface the secondary detection module 300 may generate a 3D structure of the area where the defect is located through 3D scanning technology and visually display the severity of the defect by distinguishing (e.g. visually distinguishing) the defect (e.g. by color). The user may then analyze the location where the defect occurred by enlarging the location of the defect or rotating the location of the defect at a specific angle, thereby obtaining specific information about the cause of the defect. This visualization technology can be used to accurately identify various types of defects such as cracks in the weld area, incomplete fusion, and uneven welding.

In this manner, the secondary detection module 300 according to embodiments of the present disclosure provides an environment in which the characteristics of defects can be intuitively understood and analyzed by visualizing the location of the defect in the 3D space, thereby greatly improving the accuracy and efficiency of the defect analysis during the welding defect detection process. In particular, through the 3D space visualization, a comprehensive analysis that considers not only the location of the defects but also the influence of the surroundings is possible, and through this, the reliability of the manufacturing process can be increased and the occurrence rate of defects can be reduced.

The result transmission module 400 according to embodiments of the present disclosure may transmit the determination result derived from the secondary detection module 300 to the MES 700 and the user interface in real time. Through this, it is possible to perform a process removal instruction or provide immediate feedback for improving the production process, thereby increasing the efficiency of the manufacturing process. For example, it is possible to simultaneously realize a reduction in the defect rate and an improvement in the quality by transmitting instructions for rapid processing and process condition changes for products in which welding defects are found, in real time.

The result transmission module 400, which transmits the defect determination results derived from the secondary detection module 300 to the MES 700 and the user, receive data from the data management module 200 and the detection module, converts the defect determination results into a standardized format, and transmits the converted data to the MES 700. The transmitted data may include all important information about the detection results, such as the type, location, severity, and cause of occurrence of the defect.

The result transmission module 400 may transmit data to the MES 700 in real time to enable identification of defective products and instruction for removal during the process. In response to detection of a defective product, a process removal instruction may be transmitted to the MES 700 to instruct or control the MES 700 to remove the defective product from the process (e.g. the manufacturing process). The MES 700 may remove the defective product from manufacture (e.g. may discard the defective product, or direct the defective product for further analysis or additional processes). The result transmission module 400 may visually display the detection results on the user interface to enable quick decision-making on the defects. The result transmission module 400 may provide a warning notification depending on the severity of the defect and/or automatically take action by linking with the process control system if necessary.

The result transmission module 400 may further improve the quality control and efficiency of the manufacturing process. In addition, the result transmission module 400 may identify defective products and transmit a process removal instruction for the defective products in conjunction with the MES 700. This may prevent unnecessary costs incurred in the production process of the defective products and improve the efficiency of the production process. Through this, the defective products can be prevented from being transmitted to the next process, the product quality can be guaranteed, and the reliability of the entire process can be increased.

The result transmission module 400 performs the role of transmitting the defect data determined by the secondary detection module 300 to the MES 700 in conjunction with the MES 700. The identification of the defective products is performed based on the data analyzed by the primary detection module 100 and the secondary detection module 300. And the data is processed in real time in conjunction with the MES 700. The result transmission module 400 includes a function of issuing the process removal instructions for the defective products, which is achieved by automating the process of the MES 700 identifying and classifying the defective products. The defective products may be removed from the process and classified as faulty products, or, if necessary, may be guided to an additional detection or rework process.

When a defect is detected, the result transmission module 400 may transmit an identifier (ID) of the corresponding product along with defect data (e.g. a classification of the defect). In a specific example, when a defect such as a crack, poor fusion, or uneven surface in the welding part is detected in the secondary detection module 300, the result transmission module 400 may transmit the ID of the corresponding product along with the defect data to the MES 700 to record the presence of the defect and instruct process removal. For example, when a defective product is located on a conveyor line, the MES 700 may automatically separate the defective product based on the data of the result transmission module 400, guide the defective product to a defective product storage space, or instruct the defective product to be moved to a separate rework process (e.g. to correct the defect(s)).

As such, the result transmission module 400 may identify the defective products and transmit process removal instructions in conjunction with the MES 700, thereby effectively preventing the movement of the defective products to subsequent processes and improve the quality control level of the production process. Thus, it is possible to reduce manufacturing costs due to the defects, ensure the quality of the final products, and improve the efficiency of the production process.

The result transmission module 400 may also provide real-time feedback for improving the production process based on the determination results. This simultaneously enhances the flexibility and efficiency of the process and optimizes the overall quality management.

The result transmission module 400 may analyze the defect data generated by the secondary detection module 300 and transmit real-time feedback to the MES 700 and the user interface. The result transmission module 400 may quantitatively and qualitatively evaluate the determination results and provide data for tracking occurrence of the defects or propose an improvement plan.

In a specific example, upon detection of the defect in the welding part, when the data transmitted by the result transmission module 400 to the MES 700 includes detailed information such as the location, type, severity, and occurrence frequency of the defect, the MES 700 automatically adjusts parameters of a specific process in which the defect occurred or transmits a warning message to the MES 700 and/or a worker based on the data. For example, when a crack occurs due to excessive heat during the welding process, the result transmission module 400 may provide real-time feedback to the equipment control system to adjust the welding temperature and/or inform the process manager of the cause and countermeasures. In addition, the data may be visualized and displayed on a worker's screen and the improvement target according to the analysis result may be updated in real time.

In this manner, the result transmission module 400 can provide real-time feedback based on the determination result, thereby lowering the defect occurrence rate of the production process and improving process efficiency. Through this, a cause of a defect in a production process can be eliminated or minimized in advance, and the reliability of the overall quality management system can be enhanced.

As described above, in the welding defect detection system according to embodiments of the present disclosure, the primary detection module 100 collects 3D welding image data from the welding detector 110 to precisely measure the shape of the welding part, the cleaning detector 120 analyzes surface contamination using 2D image data, and the appearance detector 130 evaluates the direction of uneven surface using 2.5D appearance image data. The data is integrated (e.g. combined) and stored in the data management module 200 and is reanalyzed in the secondary detection module 300 to precisely evaluate the cause of occurrence and severity of the welding defect. The evaluated results are transmitted to the MES 700 (and optionally the user) through the result transmission module 400 to provide a process removal instruction for the defective product and an additional process improvement direction in real time. Accordingly, a welding defect detection method according to embodiments of the present disclosure may systematically utilize multidimensional image data to improve the accuracy and reliability of welding defect detection. In addition, by comprehensively managing and analyzing data, it is possible to use the detection results in real time, thereby increasing the productivity of a secondary battery manufacturing process and reducing the defect rate.

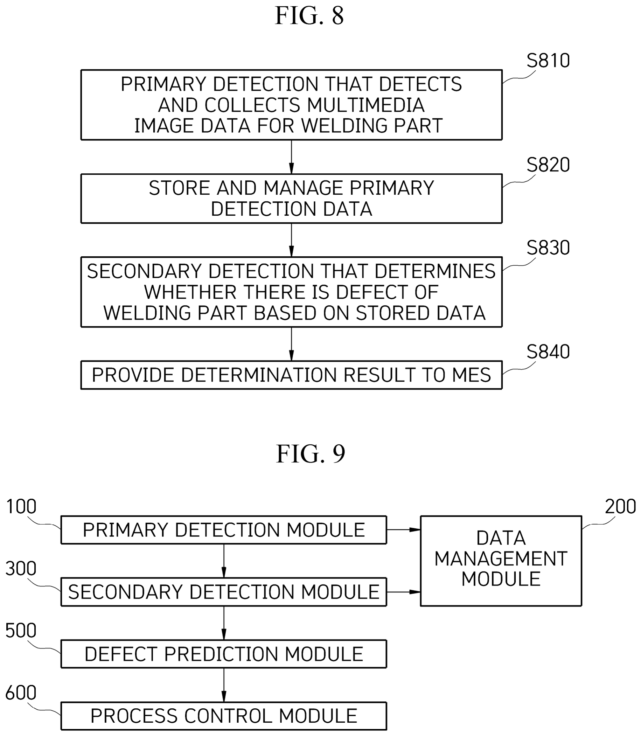

FIG. 8 illustrates a method of detecting welding defects according to another embodiment of the present disclosure. Features that are the same as in the above-described embodiments will be omitted from description of this embodiment.

A method of welding defects for a welding part of a secondary battery according to embodiments of the present disclosure may include primary detection operation S810 of detecting and collecting multidimensional image data for a welding part, an operation S820 of storing and managing the primary detection data, a secondary detection operation S830 of determining whether there is a defect in the welding part based on the stored data, and an operation S840 of providing the determination results to the MES 700.

As of the present disclosure relates to a method of inspecting welding quality through primary and secondary detection operations based on the multidimensional image data of the welding part of the secondary battery, and providing the results to the MES 700 to realize welding quality management and process improvement. As such, it is possible to quickly and accurately determine the welding defects and enable process optimization using defect data.

Primary detection operation S810 according to embodiments of the present disclosure may include detecting and collecting the multidimensional image data for the welding part of the secondary battery. The data used in the primary detection operation includes 2D image data, 2.5D appearance image data, and 3D welding image data, and this multidimensional image data is independently acquired by a plurality of detectors. In the above-described primary detection operation, the initial defect location and type of the welding part are analyzed, and defect data are quickly collected to perform a basic evaluation of the welding quality of the welding part.

The primary detection operation S810 may include collecting data including welding, cleaning, and appearance detection images from the plurality of detectors and analyzing the locations and types of the initial defects. The images may be images of portions of products (secondary batteries) including welds. In the primary detection operation S810, the multidimensional image data on the welding part of the secondary battery is collected through the plurality of detectors. The data collected in primary detection operation S810 includes image data of welding detection, cleaning detection, and appearance detection, and each detector may independently perform data collection and initial defect analysis. The images may be obtained from sensor data (e.g. cameras or detectors). The images may be of real-world products (e.g. secondary batteries). The images may be welding parts of the secondary batteries (e.g. the images may include one or more portions of the secondary batteries that include weld(s)). The images may be images of parts of secondary batteries at one or more stages during manufacture (e.g. during a manufacturing process). Accordingly, the secondary batteries may be partially manufactured when imaged.

The primary detection operation S810 may also include providing additional detection data to additionally detect defects missed during the primary detection. The additional detection data may be collected through the detector used during the existing detection or may be acquired by reanalyzing existing detection data. This additionally detects defects that were not detected during the initial analysis, thereby increasing the completeness of the welding quality evaluation of the welding part and enhancing the reliability of the data.

The operation S820 of storing and managing the data according to the embodiment of the present disclosure includes a process of systematically storing and managing primary detection data. In the operation S820 of storing and managing the data, not only the multidimensional image data but also meta information (e.g., detection performance date, time, detection conditions) is stored to facilitate data search and management. The data is structured and stored in a database, and the data is prepared to be used in the subsequent secondary detection and process analysis.

The operation S820 of storing and managing the data according to embodiments of the present disclosure may track the detection history based on the multidimensional image data and statistically visualize the analysis results. This can further increase data usability by storing the meta information such as the detection performance date and time, detection environment, and detection results.

The operation S820 of storing and managing the data may include statistically visualizing the stored data, thereby enabling the detection results to be easily understood and analyzed. Statistically visualizing the stored data may comprise generating visualization data based on statistical analysis of the stored data. This statistical visualization, according to the known technology, uses charts, graphs, and maps to visually represent complex data, making patterns, trends, and insights accessible and understandable for clearer analysis and decision-making, employing tools like histograms for distributions, scatter plots for relationships, and bar charts for comparisons, essential in big data for communication and analysis. The visualization data may be suitable for display on a user interface. This provides information necessary for evaluating the detection quality and process performance.

The secondary detection operation S830 may include analyzing (e.g. reanalyzing) the stored data based on the primary detection data to determine whether there is a defect in the welding part. In the secondary detection operation S830, defects that are not found in the primary detection are further detected or the presence of the defects is identified, and the types and severity of the defects are determined. To this end, an AI-based algorithm can be used to analyze the defect data, and a more precise quality evaluation is performed in comparison with the existing data.

The secondary detection operation S830 may also include analyzing (e.g. reanalyzing) the primary detection data to determine the presence of the defects, detect additional defects, and determine the severity of the defects. The secondary detection operation S830 further includes a process of deeply analyzing the results of primary detection operation S810 to evaluate the exact types and impacts of the defects. This additionally detects the reliability of the initial defect data and enables potential problems caused by the defects to be resolved in advance of process operations.

As discussed above, the secondary detection operation S830 may include learning the types and occurrence patterns of defects, analyzing the cause of occurrence of the defects, and classifying the types of the defects. As such, it is possible to automate defect classification and improve the speed and accuracy of data analysis. For this purpose, an AI-based algorithm may be used.

The AI-based algorithm may be trained by integrating (e.g. combining) the past data and real-time data, and the trained AI-based algorithm may predict the possibility and cause of occurrence of the defects to provide information necessary for improving the production process. A defect prediction model (e.g. a neural network model) may be trained to predict the possibility and cause of occurrence defected based on training data.

Training may comprise updating parameters of a model (e.g. a neural network model). The training may optimize the parameters based on an objective function. One or more objective functions may be combined to combine one or more tasks (e.g. through a weighted combination). For instance, for the purposes of classifying defects, the model may be updated based on an objective function that aims to minimize a classification error (e.g. based on labelled training data that defines ground truth labels (e.g. classifications) for images of defects). For the purposes of defect prediction (e.g. identification and/or predicting the possibility of a defect) the parameters may be updated to minimize a prediction error.

The operation S840 of providing the determination results to the MES may include a process of providing the determined defect data to the MES 700. The determination results may be transmitted to the MES 700 in real time, and the MES 700 may use the corresponding data to identify defective products and generate a process removal instruction or support work improvement of the production line. In the operation S840 of providing the determination results, the data may be integrated into the MES 700 to track the process history or be used for additional process improvement. Thus, in the operation S840 of providing the determination results to the MES 700, the defective products may be identified and the process removal instructions for the defective products may be transmitted. Thus, it is possible to effectively use the defect data in conjunction with the MES 700, reduce the process defect rate, and improve the production quality through rapid separation of the defective products.

As described above, the welding defect detection method according to embodiments of the present disclosure includes the process of collecting the multidimensional image data through the plurality of detectors and storing the data in the database in the primary detection operation. Next, in the secondary detection operation, the types, causes, and severity of the welding defects are determined based on the stored data, and the determination results are transmitted to the MES 700 in real time. The MES 700 analyzes the data to adjust the process conditions or take measures to stop the production of the defective products. Accordingly, the welding defect detection method can accurately evaluate the welding quality through the primary and secondary detection operations utilizing the multidimensional image data. As such, the initial defects can be quickly detected, and the presence and severity of the defects can be determined through additional analysis. In addition, by providing the result data to the MES 700, the production process can be optimized in real time, the production of defective products can be blocked, and the overall process efficiency and product quality can be improved.

FIG. 9 illustrates a welding defect detection system according to another embodiment of the present disclosure. Features that are the same as in the above-described embodiments will be omitted for detailed description in this embodiment.

A welding defect detection system for detecting welding defects in a welding part of a secondary battery according to an embodiment of the present disclosure may include a primary detection module 100 configured to collect and preprocess multidimensional image data of a welding part, a data management module 200 configured to store and manage the preprocessed data, a secondary detection module 300 configured to reanalyze and determine whether there is a defect in the welding part based on the stored data, a defect prediction module 500 configured to analyze the possibility of occurrence of defects in the welding part by utilizing the secondary detection data, and a process control module 600 configured to control a process based on the defect prediction result.

Aspects of the present disclosure relate to a system that can predict the occurrence of welding defects based on the multidimensional image data and control the process based on the possibility of occurrence in order to perform quality inspection on the welding part of the secondary battery, thereby simultaneously improving defect prevention and production efficiency by switching from the existing post-defect determination methods to pre-prediction and process control.

The primary detection module 100 collects multidimensional image data for the welding part and preprocesses the collected data into a format suitable for defect analysis. The primary detection module 100 may collect 2D, 2.5D, and 3D image data individually or in a fusion manner, and may perform image noise removal, resolution adjustment, and setting of a region of interest in a preprocessing process. This may improve the quality of the data transmitted to the defect prediction module 500.

The primary detection module 100 may improve the prediction accuracy of welding defects by integrating (e.g. combining) the multidimensional image data. As such, it is possible to enhance the stability of the production process by effectively merging the multidimensional data to improve the reliability of defect prediction and to simultaneously reduce the defect rate and improve quality management efficiency. In particular, it is possible to overcome the limitations of existing detection methods through multi-aspect analysis of data and enable precise welding quality management.

The primary detection module 100 collects the multidimensional image data and integrates the multidimensional image data to improve the accuracy of defect prediction. The multidimensional image data includes 2D, 2.5D, and 3D image data, and the data provides information suitable for analyzing a specific defect element. The 2D image data provides condition and color information of the surface, the 2.5D appearance image data provides height information of the surface, and the 3D welding image data provides spatial shape and size information. The primary detection module 100 may fuse this data and integrate it into a single analysis model, thereby combining the strengths of the different types of data and improve the accuracy of defect prediction.

This primary detection module 100 may preprocess the fused data and prepare to transmit the preprocessed data to the defect prediction module 500. The preprocessing process may include data normalization, noise removal, and/or setting of a region of interest. And this process may integrate various multidimensional image data into a consistent format to ensure the reliability of the analysis results. This enables more precise and comprehensive defect analysis than the existing single data-based detection.

The process of integrating the multidimensional image data may be performed using an algorithm that ensures consistency between the data and effectively combines complementary information. For example, depth information in 3D welding image data may complement surface defect information in the 2D image data, and 2.5D appearance image data may be used to analyze the cause of the defect by connecting the surface shape and the depth information.

In a specific embodiment, the primary detection module 100 uses the 2D and 3D image data in a combination to simultaneously analyze color unevenness and depth change of the welding part. For example, color unevenness detected in the 2D image data may identify the location of a surface defect, and the depth change of the same location in the 3D welding image data may be analyzed to quantitatively evaluate the effect of the defect on the welding quality. The 2.5D appearance image data additionally provides the slope and outline of the welding part to evaluate the overall welding quality.

Accordingly, by integrating the multidimensional image data to increase the prediction accuracy of welding defects, it is possible to reduce the uncertainty of analysis that may occur in the existing single data-based detection. As such, the types and causes of occurrence of defects can be identified more accurately, and the production process can be optimized based on the results of the prediction analysis.

The data management module 200 according to embodiments of the present disclosure stores, retrieves, and manages the data collected and preprocessed in the primary detection module 100. The data management module 200 integrates and stores the multidimensional image data and meta information, and systematically manages the detection history and the related information to ensure temporal changes and traceability of data.

The secondary detection module 300 according to embodiments of the present disclosure analyzes (e.g. reanalyzes) the stored data to determine whether there is a defect in the welding part. The secondary detection module 300 additionally detects defects missed in the initial detection and identifies the types and severity of the defects to increase the reliability of the defect detection. In particular, the secondary detection module 300 analyzes (e.g. reanalyzes) whether there is a defect based on the primary detection data. When the primary detection module 100 provides the initial defect data, the secondary detection module 300 analyzes (e.g. reanalyzes) the initial defect data to determine the presence of the defect. This additionally detects errors that may occur in the initial detection and increases the reliability of the detection.

The above-described secondary detection module 300 includes a function for analyzing the severity of the defect. This not only determines whether there is a defect, but also evaluates whether the severity of the defect can cause a functional problem in the welding part. A severity level and/or severity score may be assigned to the defect representing the severity of the defect. This feature plays an important role in the overall evaluation of the welding quality and in ensuring the stability of the product.

The secondary detection module 300 may also perform an additional defect detection function. This feature additionally identifies defects that were not previously detected and uses the multidimensional image data to identify the locations and types of defects that were not found in the primary detection.

In a specific example, after collecting the primary detection data in the secondary battery manufacturing process, the secondary detection module 300 analyzes (e.g. reanalyzes) the collected data. For example, when the location of the defect in a specific weld area is identified from the data provided by the primary detection module 100, the secondary detection module 300 identifies whether the defect actually exists and evaluates the impact of the defect on the functionality of the product. In addition, the secondary detection module 300 detects micro-sized defects that are not identified in the primary detection to improve the detection accuracy. The secondary detection module 300 uses the multidimensional image data and performs comprehensive defect analysis by integrating the 2D, 2.5D, and 3D image data.

Accordingly, the secondary detection module 300 reanalyzes the initial detection data to enhance the reliability of the detection results. In particular, the secondary detection module 300 completes the detection process by accurately evaluating the presence and severity of the defect and performing additional defect detection. Through this, the quality of the welding part can be more precisely guaranteed, and the stability and reliability of the product can be greatly improved.

A defect prediction model 500 analyzes the possibility of occurrence of the defect in the welding part by combining past process data and real-time data based on the secondary detection data. The defect prediction module 500 predicts the possibility of occurrence of the defect by learning the cause and pattern of occurrence of defects. For this purpose, an AI-based algorithm may be used.

This can increase the accuracy of data analysis and predict defects that may occur in the welding process in advance, thereby improving the production quality and efficiency. In particular, this enables precise defect prediction by performing training on the past data and utilizing the real-time data.

The defect prediction module 500 may determine possibility of occurrence of welding defects by combining past process data and real-time data. The past process data may include defect information collected from a previous process, production conditions, environmental variables, etc., and the real-time data may include process-related data such as welding speed, welding temperature, and current intensity collected from a current process.

The defect prediction module 500 may analyze data using the AI-based algorithm. The algorithm may include machine learning and deep learning techniques and learns the patterns of the past process data to model the correlation between variables related to the occurrence of the defects. The real-time data is input into the learned model to calculate the possibility of occurrence of defects in the current process state in real time, and the predicted result is transmitted to the process control module 600. Thus, potential defects can be predicted in advance and the process can be adjusted to avoid or reduce the defects.

The defect prediction module 500 may be used in data preprocessing, learning, prediction, and result output operations. In the preprocessing operation, the formats of the past data and the real-time data are unified, noise is removed, and important variables are selected. In the learning operation, the AI-based algorithm may be used to learn the past data to build the defect prediction model 500. In the prediction operation, the real-time data is applied to the model to calculate the probability of occurrence of the defect. Finally, in the result output operation, statistical results and visualizations with respect to the probability of occurrence of the defect can be provided.

In a specific embodiment, the defect prediction module 500 may train the AI-based algorithm using process variables such as welding speed, welding temperature, and current intensity as the past data. When the data collected in real time is input, the prediction model can calculate the probability of occurrence of the defect under specific process conditions with an accuracy of 95% or higher. For example, when the welding speed exceeds a certain level in the real-time data, the defect prediction module 500 may predict that the probability of occurrence of the defect increases to 80% or higher, and this information may be transmitted to the process control module 600 to induce adjustment (e.g. reduction) of the welding speed. By combining the past process data and the real-time data, the possibility of occurrence of welding defects is predicted, thereby significantly improving the accuracy of defect prediction. Thus, potential defects can be identified in advance to prevent production of the defective products and optimize the production process.

The process control module 600 controls the process conditions in real time based on the defect prediction result. The process control module 600 may prevent predicted defects by controlling the process conditions such as welding speed, welding temperature, and current intensity, thereby minimizing the quality deterioration and the rate of rejection during the production process. In this manner, the welding defect detection system may collect the multidimensional image data with respect to a welding part of the case and the cap plate during the secondary battery manufacturing process. The 2D image data of the welding part may be collected through the appearance detection, the 2.5D appearance image data may be collected through the cleaning detection, and the 3D welding image data may be collected through the welding detection. The collected data is preprocessed in the primary detection module 100 and stored and managed by the data management module 200. Next, the secondary detection module 300 analyzes (e.g. reanalyzes) whether there is a defect, and the defect prediction module 500 analyzes the possibility of occurrence of the defect based on the reanalyzed result. The process control module 600 uses the analyzed results to adjust the process conditions in real time to minimize the defect rate.

Accordingly, the welding defect detection system can accurately determine whether there is a defect in the welding part in the secondary battery manufacturing process, and the system can predict the possibility of occurrence of the defect, thereby improving the quality of the production process. In particular, the welding defect detection system can increase the reliability of defect determination through the multidimensional data analysis including the secondary detection and improve the production efficiency by optimizing the process.

FIG. 10 is a flowchart illustrating a manufacturing process of a prismatic secondary battery and a welding defect detection system according to an embodiment of the present disclosure.

The manufacturing process of a prismatic secondary battery starts with an operation of assembling the case and the cap plate. The secondary battery is then sealed by edge welding (e.g. border welding) of the case and the cap plate. In this process, there is the possibility that an initial welding defect may occur. And such an initial welding defect is detected and collected by the primary detection module 100 and used for the initial analysis of the welding quality.

3D welding detection is a process of analyzing the shape of the welding part in a 3D manner, and in this processs shape data is collected including the height and width of the welding part. The collected data is stored by the primary detection module 100 and used for analysis of the initial welding quality. Next, an electrolyte injection operation is performed to inject electrolyte into the can.

After the electrolyte injection, a cleaning operation is performed to clean the surface of the case and cap plate. The cleaning operation removes contaminants generated during the welding or assembly process, and the result of the cleaning operation is identified through 2D cleaning detection. The cleaning status is detected by the primary detection module 100, and the cleaning result data is collected and analyzed.

2.5D appearance detection is a process of identifying external defects by detecting the appearance of the welding part, case, and cap plate. The data generated in the above process is stored and managed in the data management module 200. The data management module 200 integrates and manages the multidimensional image data collected in the previous process and structurally stores the data including meta information.

Secondary detection is a process of reanalyzing all the data collected in the previous process, including cleaning detection (2D), appearance detection (2.5D), and welding detection (3D) image data. The secondary detection module 300 analyzes whether there is a defect in the welding part and evaluates the type, location, and severity of the defect. In addition, the process can be used to analyze the cause of the defect and predict the possibility of occurrence of the defect.

Finally, the determination operation determines whether the secondary battery is accepted based on the detection results. The result transmission module 400 transmits the determination result to the MES 700, and the MES 700 identifies defective products and instructs that the defective products be excluded from the subsequent process. Only the accepted products are moved to the subsequent process.

FIG. 11 illustrates the signal flow of a welding defect detection system according to an embodiment of the present disclosure.

In the preceding process, a welding part is formed such that the case and the cap plate of the secondary battery are welded.

The primary detection module 100 includes a welding detector 110, a cleaning detector 120, and an appearance detector 130. The welding detector 110 may generate 3D images, the cleaning detector 120 may generate 2D images and the appearance detector 130 may generate 2.5D images. Each detector collects multidimensional image data and detects initial defects. All of the data collected from the primary detection module 100 are stored and managed by the data management module 200.

The secondary detection module 300 analyzes (e.g. reanalyzes) the data provided from the data management module 200 to determine the presence of defects, detect additional defects, and evaluate the severity of the defects. The secondary detection module 300 predicts the possibility of occurrence of defects, and the analysis results are used to classify the severity of the defects and for process control.

The analyzed results are provided to the MES 700 through the result transmission module 400. The result transmission module 400 transmits data in real time and supports process management and classification of defective products. The MES 700 monitors the production process based on the data provided from the result transmission module 400 and optimizes the manufacturing process in conjunction with the process control module 600. The process control executes commands for minimizing the possibility of occurrence of welding defects and thereby maintains and guarantees the quality of the entire manufacturing process.

FIG. 12 illustrates a specific function of the secondary detection module 300 according to an embodiment of the present disclosure.

The secondary detection module 300 performs reanalysis based on the primary detection data. The secondary detection module 300 analyzes the data collected from the primary detection module 100 to identify additional information that was not identified in the initial detection. The reanalyzed data is used to determine the presence of defects. The validity of the defect suspected in the primary detection is identified. Thus, it is possible to significantly improve the reliability of the detection.

The secondary detection module 300 detects additional defects and evaluates their severity. In particular, the secondary detection module 300 detects defects that were not detected in the initial detection, and evaluates the impact of each additional defect on the safety and performance of the secondary battery.

The secondary detection module 300 may learn the types and occurrence patterns of defects. The secondary detection module 300 may analyze accumulated data and learn the causes and characteristics of defects, thereby predicting the defects.

The secondary detection module 300 may determine the causes of defects and classify the types of the defects. That is, the secondary detection module 300 identifies the causes of occurrence of the defects, classifies various defects for each type, and stores the classified results in a database. The secondary detection module 300 can also visualize the locations of the defects in a 3D space. This allows for intuitive understanding of the detection results.

FIG. 13 illustrates the overall signal flow and data transmission process of a welding defect detection system according to an embodiment of the present disclosure.

The primary detection module 100 includes a welding detector 110, a cleaning detector 120, an appearance detector 130, and a file collection agent 140, and collects and stores multidimensional image data. The file collection agent 140 transmits data generated from each detector to the data management module 200.

The data management module 200 stores and manages data received from the primary detection module 100. The data management module 200 manages image data and meta data in an integrated manner and supports efficient data search and analysis. The stored data is transmitted to the secondary detection module 300 and the secondary detection server 800 to perform additional analysis and processing.

The secondary detection module 300 may include several secondary detection units, and each unit performs functions such as determining the presence of a defect, additional detection and severity evaluation of a defect, defect learning, defect occurrence cause analysis and type classification, and defect location visualization in a 3D space. Each unit operates based on data received from the data management module 200, and the detection results are returned to the secondary detection server 800.

The secondary detection server 800 manages the data generated from the secondary detection module 300 in an integrated manner and performs additional processing based on the managed data in the defect prediction module 500 and the process control module 600. The secondary detection server 800 transmits the results to the MES 700 and the manager and detector through the result transmission module 400. In addition, the manager and detector may control the detection (control the detection target and condition cycle) through a secondary detection management program and a secondary detection review program, and view and modify the corresponding data.

The result transmission module 400, the defect prediction module 500, or the process control module 600 may be included in the secondary detection server 800 or designed as a separate component.

The MES 700 is a manufacturing execution system that controls the entire detection process and comprehensively manages the results. The MES 700 generates a detection request to transmit the generated request to the secondary detection server 800. And the MES 700 analyzes the detection results received from the server to manage the quality of the manufacturing process.

FIG. 14 illustrates defect types determined by a welding defect detection system according to the embodiment of the present disclosure, The defect types of the welding part are shown through multidimensional image data of 3D images, 2D images, and 2.5D images.

### (A) Welding defects

In 3D image detection, welding defects are clearly detected, and unevenness and protrusions on the surface of the welding part are clearly visualized. The welding detector analyzes the defect location and size based on the above, and the welding detector combines the analyzed results with the data from the cleaning detector and the appearance detector to determine defects. The defect cross-section is also clearly visible in 2D image detection, indicating structural imperfection in the welding part. In 2.5D image detection, the appearance of the defect is visually identified, and the overall welding defect is identified.

### (B) Welding detection false detection

In the 3D image, a corresponding welding part looks like a welding defect. But, through the 2D image analysis of the cleaning detector, it is actually determined to be a foreign substance rather than a defect.

### (C) Difficulty in detection in single welding detection

In 3D images, the shape of the defect is identified, but there are cases where the defect is unclear or cannot be identified as a real defect. In such cases, the data from the cleaning detector and the appearance detector are integrated and analyzed to determine whether there is a defect. In 2D images, the defect cross-section appears faint, and additional multidimensional analysis is required. In 2.5D images, the defect is not clearly visible in appearance, and whether there is a defect is finally determined through comprehensive analysis of the multidimensional image data.

In this manner, the welding defects of the welding part can be accurately detected through the data integration analysis process in the welding detector, cleaning detector, and appearance detector. Thus, it is possible to minimize detection errors and reliably guarantee the quality of the welding part.

According to embodiments of the present disclosure, by inspecting the welding quality of a welding part of a secondary battery, the safety of the secondary battery can be guaranteed and the quality of the manufacturing process can be improved. By utilizing multidimensional image data, initial defects can be quickly determined, and defects missed in primary detection can be detected through secondary detection, thereby increasing the reliability of the detection.

In addition, methods according to the embodiments of the present disclosure may be implemented in the form of a program command that can be executed through various computer means and recorded on a computer-readable medium. The embodiments according to the disclosure may be implemented in the form of program instructions that can be executed by various computer components, and may be stored on a computer-readable recording medium. The methods described herein may be implemented on a computer system. The computer system may be distributed across multiple devices and/or locations.

The computer-readable recording medium may include program instructions, data files, and data structures, separately or in combination. The program instructions stored on the computer-readable recording medium may be specially designed and configured for the present disclosure, or may also be known and available to those skilled in the computer software field. Examples of the computer-readable recording medium include the following: magnetic media such as hard disks, floppy disks and magnetic tapes; optical media such as compact disk-read only memory (CD-ROM) and digital versatile disks (DVDs); magnetooptical media such as floptical disks; and hardware devices such as read-only memory (ROM), random access memory (RAM) and flash memory, which are specially configured to store and execute program instructions. Examples of the program instructions include not only machine language codes created by a compiler, but also high-level language codes that can be executed by a computer using an interpreter.

Embodiments are set out in the following Clauses:
Clause 1. A welding defect detection system comprising:
   a primary detection module configured to detect and collect multidimensional image data of a welding part of a secondary battery;
   a data management module configured to store and manage primary detection data detected by the primary detection module;
   a secondary detection module configured to determine whether there is a defect in the welding part based on the stored and managed primary detection data; and
   a result transmission module configured to provide a determination result to a manufacturing execution system.
Clause 2. The welding defect detection system of Clause 1, wherein the primary detection module is configured to collect data including welding, cleaning, and appearance detection images from a plurality of detectors, and the primary detection module is configured to analyze locations and types of initial defects.
Clause 3. The welding defect detection system of Clause 1 or Clause 2, wherein the primary detection module is configured to provide additional detection data to detect additional defects missed during primary detection.
Clause 4. The welding defect detection system of any preceding Clause, wherein the data management module is configured to manage the multidimensional image data and meta information by integrating and storing the primary detection data and secondary detection data.
Clause 5. The welding defect detection system of any preceding Clause, wherein the data management module is configured to track a detection history based on the multidimensional image data and statistically visualize an analysis result.
Clause 6. The welding defect detection system of any preceding Clause, wherein the secondary detection module is configured to reanalyze data of the primary detection module to determine presence of defects, additionally detect defects, and determine severity of defects.
Clause 7. The welding defect detection system of any preceding Clause, wherein the secondary detection module is configured to learn types and occurrence patterns of defects, analyze causes of occurrence of defects, and classify the types of defects.
Clause 8. The welding defect detection system of any preceding Clause, wherein the secondary detection module is configured to visualize locations of the defects of the welding part in a three-dimensional space.
Clause 9. The welding defect detection system of any preceding Clause, wherein the result transmission module is configured to identify a defective product in conjunction with the manufacturing execution system and transmit a process removal instruction for the defective product.
Clause 10. The welding defect detection system of any preceding Clause, wherein the result transmission module is configured to provide real-time feedback for improving a production process based on the determination result.
Clause 11. A welding defect detection method comprising:
   a primary detection operation of detecting and collecting multidimensional image data for a welding part of a secondary battery;
   an operation of storing and managing primary detection data detected by the primary detection operation;
   a secondary detection operation of determining whether there is a defect in the welding part based on the stored and managed primary detection data; and
   an operation of providing the determination result to an manufacturing execution system.
Clause 12. The welding defect detection method of Clause 11, wherein the primary detection operation includes collecting data including welding, cleaning, and appearance detection images from a plurality of detectors and analyzing locations and types of initial defects.
Clause 13. The welding defect detection method of Clause 11 or Clause 12, wherein the primary detection operation includes providing additional detection data to detect additional defects missed during the primarily detection operation.
Clause 14. The welding defect detection method of any of Clauses 11-13, wherein the operation of storing and managing the data includes tracking a detection history based on the multidimensional image data and statistically visualizing an analysis result.
Clause 15. The welding defect detection method of any of Clauses 11-14, wherein the secondary detection operation includes reanalyzing the primary detection data to determine presence of defects, additionally detect defects, and determine severity of defects.
Clause 16. The welding defect detection method of any of Clauses 11-15, wherein the secondary detection operation includes learning types and occurrence patterns of defects, analyzing causes of occurrence of defects, and classifying the types of defects.
Clause 17. The welding defect detection method of any of Clauses 11-16, wherein the operation of providing the determination result to the manufacturing execution system includes identifying a defective product and transmitting a process removal instruction for the defective product.
Clause 18. A welding defect detection system comprising:
   a primary detection module configured to collect and preprocess multidimensional image data of a welding part of a secondary battery;
   a data management module configured to store and manage the preprocessed data;
   a secondary detection module configured to reanalyze and determine whether there is a defect in the welding part based on the stored and managed data;
   a defect prediction module configured to determine a possibility of occurrence of defects in the welding part by using secondary detection data; and
   a process control module configured to control a process based on a defect prediction result of the defect prediction module.
Clause 19. The welding defect detection system of Clause 18, wherein the secondary detection module is configured to determine presence of defects, determine severity of defects, and detect additional defects based on primary detection data.
Clause 20. The welding defect detection system of Clause 18 or Clause 19, wherein the defect prediction module is configured to combine past process data and real-time data to predict the possibility of occurrence of welding defects.

Although the present disclosure has been described above with respect to embodiments thereof, the present disclosure is not limited to the disclosed embodiments. Various modifications and variations can be made thereto by those skilled in the art within the scope of the claims.

## Claims

1. A welding defect detection system comprising:
a primary detection module (100) configured to detect and collect multidimensional image data of a welding part of a secondary battery;
a data management module (200) configured to store and manage primary detection data detected by the primary detection module (100);
a secondary detection module (300) configured to determine whether there is a defect in the welding part based on the stored and managed primary detection data; and
a result transmission module (400) configured to provide a determination result to a manufacturing execution system.

2. The welding defect detection system of claim 1, wherein the primary detection module (100) is configured to collect data including welding, cleaning, and appearance detection images from a plurality of detectors, and the primary detection module (100) is configured to analyze locations and types of initial defects.

3. The welding defect detection system of claim 1 or claim 2, wherein the data management module (200) is configured to manage the multidimensional image data and meta information by integrating and storing the primary detection data and secondary detection data.

4. The welding defect detection system of any preceding claim, wherein the data management module (200) is configured to track a detection history based on the multidimensional image data and statistically visualize an analysis result.

5. The welding defect detection system of any preceding claim, wherein the secondary detection module (300) is configured to analyze data of the primary detection module (100) to determine presence of defects, additionally detect defects, and determine severity of defects.

6. The welding defect detection system of any preceding claim, wherein the secondary detection module (300) is configured to learn types and occurrence patterns of defects to analyze causes of occurrence of defects, and classify the types of defects.

7. The welding defect detection system of any preceding claim, wherein the secondary detection module (300) is configured to visualize locations of the defects of the welding part in a three-dimensional space.

8. The welding defect detection system of any preceding claim, wherein the result transmission module (400) is configured to identify a defective product in conjunction with the manufacturing execution system and transmit a process removal instruction for the defective product.

9. The welding defect detection system of any preceding claim, wherein the result transmission module (300) is configured to provide real-time feedback for improving a production process based on the determination result.

10. A welding defect detection method comprising:
a primary detection operation (S810) of detecting and collecting multidimensional image data for a welding part of a secondary battery;
an operation (S820) of storing and managing primary detection data detected by the primary detection operation (S810);
a secondary detection operation (S830) of determining whether there is a defect in the welding part based on the stored and managed primary detection data; and
an operation (S840) of providing the determination result to an manufacturing execution system.

11. The welding defect detection method of claim 10, wherein the primary detection operation (S810) includes collecting data including welding, cleaning, and appearance detection images from a plurality of detectors and analyzing locations and types of initial defects.

12. The welding defect detection method of claim 10 or claim 11, wherein the operation (S820) of storing and managing the data includes tracking a detection history based on the multidimensional image data and statistically visualizing an analysis result.

13. The welding defect detection method of any of claims 10-12, wherein the secondary detection operation (S830) includes reanalyzing the primary detection data to determine presence of defects, additionally detect defects, and determine severity of defects.

14. The welding defect detection method of any of claims 10-13, wherein the secondary detection operation (S830) includes learning types and occurrence patterns of defects for analyzing causes of occurrence of defects, and classifying the types of defects.

15. The welding defect detection method of any of claims 10-14, wherein the operation of providing the determination result to the manufacturing execution system includes identifying a defective product and transmitting a process removal instruction for the defective product.
